# EUROPEAN PATENT SPECIFICATION

(11) **EP 1 532 186 B1**
(45) Date of publication and mention of the grant of the patent: **16.04.2008**
(21) Application number: 03760617.5
(22) Date of filing: 13.06.2003
(51) Int. Cl.: C08G 18/24, C08G 77/00

(54) **LOW EMISSION TIN CATALYSTS**
EMISSIONSARME ZINNKATALYSATOREN
CATALYSEURS A L'ETAIN A FAIBLE EMISSION

(30) Priority: 21.06.2002 EP 02013830
(43) Date of publication of application: 25.05.2005
(73) Proprietor: Chemtura Organometallics GmbH, 59180 Bergkamen (DE)
(72) Inventor: SCHUMACHER, Oliver, 59368 Werne (DE)
(74) Representative: Wibbelmann, Jobst
(86) International application number: PCT/EP2003/006265
(87) International publication number: WO 2004/000906

(56) References cited:
- GB-A- 1 141 708
- GB-A- 1 250 498
- US-A- 4 332 927
- US-A1- 2002 025 989
- DATABASE WPI Section Ch, Week 199141 Derwent Publications Ltd., London, GB; Class A12, AN 1991-300328 XP002216476 & JP 03 200872 A (TOSHIBA SILICONE KK), 2 September 1991 (1991-09-02)

## Description

### BACKGROUND OF THE INVENTION

### 1. Field of the Invention

The present invention is related to the use of simple tin catalysts for the manufacturing of polyurethane foams with significantly reduced emission. More particularly, the present invention is related to the use of dialkyltin dicarboxylates R₂SnX₂ which are derived from carboxylic acids with particularly low emissivity, but provide high activity for catalyzing the reaction of isocyanates with polyols and are highly compatible with the components of typical polyurethane formulations.

### 2. Description of Related Art

Tin compounds are well known as very effective catalysts for the manufacturing of polyurethanes, silicones, and polyesters.

Polyurethanes are basically manufactured by reaction of isocyanates with polyols. Commonly used isocyanates are either aromatic or aliphatic di- or polyisocyanates, commonly used polyols are either polyetherpolyols or polyesterpolyols. Polyurethanes derived from aliphatic isocyanates have the general advantage of a better light stability than polyurethanes derived from aromatic isocyanates. Aliphatic isocyanates are generally less reactive than aromatic isocyanates and hence require particularly strong catalysts; typically organotin catalysts are used, either alone or in combination with other catalysts.

Polymers, and in particular polyurethanes are of increasing importance in the manufacturing of modem car interiors. E.g. US 5656677 teaches the use of polyurethane foams derived from aliphatic isocyanates for the manufacturing of light stable car interiors.

A general problem connected with the use of plastics in car interiors is the emission of volatile organic compounds at elevated temperatures; said volatile organic compounds may form condensate films on the car windows, reducing the visual transparency and thereby causing the so called "fogging effect". The emissivity ("fogging") properties of a plastic material are determined either by the amount (by weight) of condensate formed under defined conditions, or by the loss of transparency caused by this condensate on a glass sheet.

Modem plastic materials are formulations of different base materials and additives, which can separately or in combination contribute to the fogging. Several efforts have been undertaken to reduce the fogging from plastic materials by optimising base materials and additives. In manufacturing of polyurethanes, e.g., major achievements have already been made by the introduction of purified polyesterpolyols (with reduced contents of volatile cyclic esters), and by the elimination of volatile antioxidant additives (see e.g.: EP 1153951 to Bayer; DE 19611670 to BASF; G. Baatz, S. Franyutti, Paper 9, UTECH '94 Conference, 1994, The Hague).

Facing increasingly tight regulations and consumer demands, further reductions of emission levels are required. After elimination of the previous main contributors, further improvement has to target the so-far neglected minor additives. Among said additives, particularly urethane catalysts contribute to the fogging.

Common catalysts for the urethane reaction are tertiary amines, stannous tin compounds, dialkyltin compounds, and compounds of other metals. The mentioned classes of catalysts may contribute to fogging either because of their own volatility (e.g. amines), or by formation of volatile reaction products or degradation products. Attempts have been reported to reduce the fogging properties of said catalysts: using catalysts which are reactive with isocyanates can lead to firm fixation of those catalysts in the polymer matrix and thereby reduce fogging. Examples for isocyanate-reactive amines are given e.g. in EP0799821 (and in the literature cited there). Examples for isocyanate-reactive dialkyltin catalysts are given e.g. in EP0417605. A general drawback of such isocyanate-reactive catalysts is their reduced catalytic activity. Also, reaction with the isocyanate and incorporation into the polymer matrix changes the polymer properties.

A useful polyurethane catalyst must have high activity for the urethane reaction, and a sufficiently high selectivity for the urethane reaction over undesired side reactions. Furthermore, it should be storage stable, readily soluble in and compatible with the polyols and/or the isocyanates, and best be liquid at ambient temperature.

Dialkyltin compounds are well known for their strong catalytic power in polyurethane reactions, and are often indispensable in order to achieve the required material properties. Particularly useful are dialkyltin dicarboxylates. Among the dialkyltin dicarboxylate polyurethane catalysts, dimethyltin dicarboxylates are the strongest.

The most common carboxylate types for dialkyltin dicarboxylate catalysts are acetate, 2-ethylhexanoate, neodecanoate, and laurate. All dialkyltin carboxylates containing these carboxylate types contribute to fogging, not only by their own volatility, but particularly by the volatility of their degradation products, the most important being the corresponding carboxylic acids.

It can be reasonably expected that dialkyltin dicarboxylates derived from carcarboxylic acids with longer alkyl chain than lauric acid would contribute less to fogging.

When simply the length of the carboxylate alkyl chain of a dialkyltin carboxylate is further increased (e.g. to saturated C₁₃ - C₁₇), one significant drawback is a decrease in the catalytic activity. Even more important drawbacks are the higher melting points ( e.g. dimethyltin dimyristate approx. 70°C, dimethyltin dipalmitate approx. 80°C), the limited solubility in the typical main components of polyurethane formulations (i.e. polyols and/or isocyanates), and the limited compatibility with said main components.

Certain dialkyltin dicarboxylates having 13 or more carbon atoms and at least one olefinic double bond in the carboxylate alkyl chain are liquid at ambient temperature. Example are oleates, ricinoleates, linolates, and linoleates of dimethyltin and dibutyltin.

E.g., dimethyltin dioleate has been described as a heat stabiliser for PVC. No reference to polyurethane catalysis was made. Furthermore, GB 1250498 teaches the use of a "basic dimethyltin oleate" as a curing catalyst for silicone rubbers. Said", basic dimethyltin oleate" is described as a "Harada complex" R₂SnA₂*R₂SnO; according to the modern state-of-the-art, it would be called 1,1',3,3'-tetramethyl-1,3-oleoyloxo-1,3,2-stannoxane.

E.g., dibutyltin dioleate has been described as a heat stabiliser for PVC, as solvent extraction agent for arsenate ions, as catalyst for esterifications, as catalyst for curing of silicones and as catalyst for curing of electrodeposition coatings. One publication (R. V. Russo, J. Cell. Plast. 12, (1976), 203) reported comparative testing of dibutyltin dioleate as polyurethane foam catalyst, but said article teaches that dibutyltin dioleate is a particularly poor catalyst. No reference to emissivity was made.

E.g., use of dioctyltin diricinoleate has been reported as a polyurethane gelation catalyst, having reduced toxicity (US4332927 to Caschem). No reference to emissivity was made.

### SUMMARY OF THE INVENTION

The present invention is directed to a polyurethane article as defined in claim 1. Said article is obtained by using low emission organotin compounds of the general formula

**R₂SnX₂**

wherein R is methyl X is a carboxylate group with 14-20 carbon atoms having at least one olefinic double bond, optionally substituted; preferred are oleate, ricinoleate, linoleate and linolenate; particularly preferred is oleate.
These compounds can be used as low emission catalysts in all fields of applications where organotin compounds are known to be useful as catalysts. Such fields include, but are not limited to, catalysis of esterification and transesterification reactions, condensation curing of RTV II silicones, curing of cataphoretic electrode-position coatings, deblocking of blocked isocyanates, and, especially, curing of the synthesis of polyurethanes by the reaction of isocyanates with polyols. Advantageous is particularly the low emissivity, but high activity for catalyzing the reaction of isocyanates with polyol, and high compatibility with the typical components of polyurethane formulations.

The invention is further directed to the use of said organotin compounds as catalysts for the production of low emission polyurethanes, particularly for use in car interiors. Especially preferred is the use of said catalysts for the production of polyurethanes derived from aliphatic isocyanates. The inventive catalysts can be used alone or in combination with other catalysts.

### DESCRIPTION OF THE PREFERRED EMBODIMENTS

The present invention is directed to a polyurethane article as defined is claim 1. Said article is obtanted by using low emission dialkyltin dicarboxylates of the general formula

**R₂SnX₂**

R is
X is a carboxylate group derived from a carboxylic acid of the type

**R'-COOH**

wherein R' is a C₁₃-C₁₉-hydrocarbyl group having one or more olefinic double bonds. Typically, R' is an aliphatic and unbranched alkenyl group; it may be further substituted, e.g., with one or more hydroxy groups. The alkenyl group may be present in the cis-form, or in the trans-form, or a mixtures of both forms.
Preferred carboxylate groups are oleate, ricinoleate, linoleate and linolenate. Particularly preferred is oleate.
Said low emission dialkyltin dicarboxylates can be synthesised from commercially available raw materials using standard synthesis methods for dialkyltin dicarboxylates; e.g. by reaction of dialkyltin oxides with carboxylic acids, or by reaction of dialkyltin dichlorides with alkali carboxylates, or by reaction of dialkyltin dichlorides with carboxylic acids and bases, etc.
Said low emission dialkyltin dicarboxylates are liquid at room temperature, or melt at a low temperature slightly above room temperature. They are well soluble or mixable with polyetherpolyols and/or polyesterpolyols, which are widely used in the manufacturing of polyurethanes. Several of said low emission dialkyltin dicarboxylates are soluble in aliphatic and/or aromatic isocyanates, which are widely used in the manufacturing of polyurethanes. When dissolved, they have an excellent compatibility with said polyols and isocyanates, and do not precipitate from solution when stored at ambient temperature. When dissolved in isocyanates, they do not promote the formation of isocyanurates (isocyanate trimers), which is a common side-reaction of several other organotin catalysts.
Said low emission dialkyltin dicarboxylates have only very low volatility, and when degraded by hydrolysis, alcoholysis, acidolysis, or related reactions, the degradation products formed therefrom also have only very low volatility.
Said low emission dialkyltin dicarboxylates have a high but at least sufficient catalytic activity for catalyzing the reaction of isocyanates with alcohols to form urethanes.

The present invention is further directed to the use of said low emission dimethkyltin dicarboxylates as catalysts for the production of low emission polyurethanes

Said low emission polyurethanes produced by to the use of said low emission dimethyltin dicarboxylates may appear in any form generally applicable to polyurethanes, as foams (rigid, flexible, high resiliency, integral, microcellular), RIM, RRIM, elastomers, coatings, etc.

By use of said low emission dimethyltin dicarboxylate catalysts, any general type of low emission polyurethane may be produced: foams (rigid, flexible, high resiliency, integral, microcellular ...), RIM, RRIM, elastomers, coatings, etc.

Preferred low emission polyurethanes are polyurethane foams.

Also preferred low emission polyurethanes are light stable polyurethanes derived from aliphatic isocyanates.

In manufacturing of low emission polyurethanes, the inventive low emission dimethyltin dicarboxylate catalysts can be used either alone or in combination with other catalysts. Especially, the well know synergy of dialkyltin compounds with tertiary amines in the catalysis of the urethane reaction may be used to enhance the catalytic power of the inventive dialkyltin dicarboxylate catalysts. Also, in the production of water blown foam, tertiary amine catalysts may be used to speed and direct the reaction of isocyanates with water. Examples of further common catalysts which may be used together with the inventive catalysts include metals compounds of stannous tin, Ti, Pb, Hg, Bi, Fe, Ni ...

In production of a polyurethane, the inventive low emission dimethyltin in dicarboxylate catalysts can be either added prior to the reaction to the polyol component, or to the isocyanate component, or it can be admixed with other additives to form a master blend, or it can be added directly to the reaction mixture.

The isocyanates commonly used in the production of polyurethanes are well know to those skilled in the art. Examples include TDI (toluene diisocyanate, typically mixtures of the para-isomer, and the ortho-isomer), MDI (4,4'-diphenylmethane diisocyanate), polymeric MDI, IPDI (isophorone diisocyanate), HDI (hexamethylene diisocyanate). The isocyanates are either used as such, or can also be used in a blocked form; when used in a blocked form, the blocking agent has to be cleaved of the isocyanate shortly before or during the processing.

The polyols commonly used in the production of polyurethanes are also well known to those skilled in the art. The most important classes are polyesterpolyols and polyetherpolyols, which are basically polyester resp. polyether chains, terminated and optionally further substituted with isocyanate-reactive hydroxyl groups. E.g., the most commonly used polyetherpolyols are derived from ethylen oxide and/or propylene oxide.

The polyurethane may contain further additives (like blowing agents, foam stabilisers, chain extenders, flame retardants, fillers, pigments etc.), known to those skilled in the art.

The present invention is further directed to the use of said low emission polyurethanes for use in car interiors.

The advantages and the important features of the present invention will be more apparent from the following examples.

### EXAMPLES

Glossary:
Polyol 1 is a 3500 MW polyether polyol, (OH-No. approx. 38) available from Elastogran as Lupranol 3032.
Polyol 2 is a 4700 MW polyether polyol (OH-No. approx. 36), available from Shell Chemicals as Caradol ET 36-17.
Polyol 3 is a 6000 MW polyether polyol (OH-No. approx. 28), available from DOW Chemicals as Voranol CP 6001.
Polyol 4 is a 6000 MW polyether polyol (OH-No. approx. 32-35), available from DOW Chemicals as Voranol CP 1421.
Isocyanate 1 is toluene diisocyanate (TDI, mixture of 80% para, and 20% ortho).
Isocyanate 2 is Isophorone diisocyanate (IPDI).
Isocyanate 3 is 4,4'-Diphenylmethane diisocyanate (MDI 2447).
Foam stabiliser 1 is a silicone, available from Crompton Corp. as Niax RS-171.
Amine cocatalyst 1 is Diethanolamine (DEOA).
Amine cocatalyst 2 is blend of bis(dimethylaminoethyl)ether and dipropylene glycol, available from Crompton Corp. as Niax A-1.

### Example 1

### Preparation of the Catalysts

### 1 a) Preparation of dimethyltin dioleate from dimethyltin dichloride

Into a 3-neck glass flask, equipped with a mechanical stirrer, thermometer, dropping funnel, and pH glass electrode, were placed 44 g of dimethyltindichloride (0.2 mol) and 44 g of water. The mixture was stirred until the dimethyltindichloride is completely dissolved. 113 g of oleic acid (0.4 mol) were added and the mixture was heated to 60°C.

An aqueous NaOH solution (35.5% by weight) was placed into the dropping funnel. While stirring, the NaOH solution was slowly added to the reaction mixture. NaOH addition was stopped when a pH of approx. 6 had been reached.

The mixture was heated to approx. 80 °C, then the stirrer was stopped and the phases allowed to settle.

The phases were separated and the lower (aqueous) phase discarded. The organic phase was dried in a rotary evaporator at approx. 80°C / 1 mbar, and subsequently further dried with Na2SO4. Finally, 1% of Celite (a filter aid) were added and the product was filtered.

Yield: 136.6 g of dimethyltin dioleate (96.0% of theor.). The product was a clear yellow liquid, and contained 15.8% Sn (theor. 16.7%), and 0.0% Cl (theor. 0.0%).

### 1 b) Preparation of dimethyltin dioleate from dimethyltin oxide

Into a 3-neck glass flask, equipped with a mechanical stirrer, thermometer, and a vacuum connector, were placed 57.7g of dimethyltin oxide (0.35 mol) and 197.6 g of oleic acid (0.7 mol). While stirring, the mixture was heated to 40°C, and a vacuum of 10 mbar was applied. During 1 hour the temperature was slowly risen to 70°C, and was subsequently held for another hour. Subsequently a vacuum of 1 mbar was applied, and the reaction mixture was further stirred for 1 more hour.

The vacuum was broken, and the reaction mixture was allowed to cool to room temperature. Finally, 1% of Celite (a filter aid) were added and the product was filtered.

Yield: 245.8 g of dimethyltin dioleate (98.7% of theor.). The product contained 16.5% Sn (theor. 16.7%).

It was a clear yellow liquid, having a viscosity of 100 mPa*s. It was miscible with Polyols 1, 2, and 3. It was readily soluble in Isocyanates 1, 2, and 3.

A 1% solution (by weight) of the product in Isocyanate 2 was prepared and stored at 25°C. After 3 weeks the solution was still clear, no solid material had formed and the infrared spectrum of the solution did not show the carbonyl band of an isocyanurate.

### 1 c-g ) Preparation of further dialkyltin dicarboxylates

Following the procedure described in example 1 b, the following materials were synthesised (see table 1):

**Table 1**

| Experiment | Dialkyltin oxide | Carboxylic acid | Product | Yield |
|---|---|---|---|---|
| | | | | (% of theor.) |
| 1c | Dibutyltin oxide | Oleic acid | Dibutyltin oleate | 97.6 |
| 1d | Dioctyltin oxide | Oleic acid | Dioctyltin oleate | 97.2 |
| 1e | Dimethyltin oxide | Ricinoleic acid | Dimethyltin ricinoleate | 96.3 |
| 1f | Dimethyltin oxide | Linoleic acid | Dimethyltin linoleate | 96.9 |
| 1g | Dimethyltin oxide | Linolenic acid | Dimethyltin linolenate | 98.1 |

### Example 2

### Catalyst Activity Tests

### Viscosity Measurement in Elastomers based on aromatic Isocyanates (TDI)

80 g of Polyol 1 were placed at room temperature into a dry 100 mL wide-neck glass bottle. 0.0002 mol of the respective organotin catalyst were added. The mixture was stirred for 2 minutes to dissolve the catalyst.

0.036 mol of Isocyanate 1 were added, and the mixture stirred for 2 more minutes. The bottle was then placed under a Brookfield rotary viscosimeter. The raw mixture had a Brookfield viscosity of << 1 Pa*s. Sample temperature and viscosity were recorded until the mixture became too viscous for further measurement (> 25 Pa*s). In each experiment, the time of isocyanate addition to the polyol considered as the start of the reaction (t = 0 min). Results are summarised in table 2.

**Table 2**

| Example | 2a | 2b | 2c | 2d |
|---|---|---|---|---|
| Catalyst | Dimethyltin | Dibutyltin | Dimethyltin | No Catalyst |
| | dioleate | dilaurate | dineodecanoate | |
| | | (comparison) | (comparison) | |
| Time | Viscosity | Viscosity | Viscosity | Viscosity |
| (min) | (mPa*s) | (mPa*s) | (mPa*s) | (mPa*s) |
| 0 | | | | |
| 2 | | | | |
| 4 | 800 | 600 | 1100 | 600 |
| 6 | 1000 | 800 | 1300 | 600 |
| 8 | 1300 | 1000 | 1900 | 600 |
| 10 | 1800 | 1400 | 2900 | 600 |
| 12 | 2400 | 1800 | 4700 | 600 |
| 14 | 3200 | 2200 | 7800 | 600 |
| 16 | 4100 | 2900 | 14000 | 600 |
| 18 | 5300 | 3600 | > 25000 | 600 |
| 20 | 7200 | 4400 | | 600 |
| 22 | 9200 | 5500 | | 600 |
| 24 | 12100 | 6800 | | 600 |
| 26 | 16100 | 8400 | | 600 |
| 28 | 21700 | 10300 | | 600 |
| 30 | > 25000 | 13100 | | 600 |

### Example 3

### Catalyst Activity Tests

### Viscosity Measurement in Elastomers based on aromatic Isocyanates (TDI)

Example 2 was repeated with the difference that after mixing of all components at room temperature the glass bottle was immersed in an oil heating bath. The oil bath was heated at a nearly constant rate from room temperature to 100°C, and was than held at this temperature (heating to 100°C takes typically approx. 20 minutes). In each experiment, the time of isocyanate addition to the polyol considered as the start of the reaction (t = 0 min). Results are summarised in table 3.

**Table 3**

| Example | 3a | | 3b | | 3c | | 3d | |
|---|---|---|---|---|---|---|---|---|
| Catalyst | Dimethyltin | | Dibutyltin | | Dimethyltin | | No Catalyst | |
| | dioleate | | dilaurate | | dineodecanoate | | | |
| | | | (comparison) | | (comparison) | | | |
| Time | Viscosity | Temp. | Viscosity | Temp. | Viscosity | Temp. | Viscosity | Temp. |
| (min) | (mPa*s) | (°C) | (mPa*s) | (°C) | (mPa*s) | (°C) | (mPa*s) | (°C) |
| 0 | | | | | | | | |
| 2 | | | | | | | | |
| 4 | 800 | 38 | 900 | 37 | 1200 | 34 | 600 | 34 |
| 6 | 900 | 48 | 1000 | 46 | 1300 | 40 | 500 | 42 |
| 8 | 900 | 58 | 1000 | 54 | 1500 | 48 | 500 | 51 |
| 10 | 1000 | 65 | 1000 | 63 | 1900 | 59 | 400 | 59 |
| 12 | 1300 | 72 | 1400 | 73 | 3200 | 71 | 200 | 67 |
| 14 | 2400 | 80 | 3100 | 83 | 6800 | 83 | <200 | 77 |
| 16 | 5000 | 90 | 6600 | 87 | >25000 | 91 | <200 | 84 |
| 18 | > 25000 | 95 | > 25000 | 91 | | | <200 | 92 |
| 20 | | | | | | | <200 | 95 |

### Example 4

### Viscosimetric Catalyst Activity Tests

### Elastomer based on aliphatic Isocyanate(IPDI)

75 g of Polyol 2 were placed at room temperature into a dry 100 mL wide-neck glass bottle.

In a dry glass flask, 0.00016 mol of the respective organotin catalyst and 5,6 g of Isocyanate 2 are mixed by stirring.

The isocyanate/catalyst mixture is added to the polyol at room temperature, and the mixture stirred for 2 more minutes. The glass bottle was immersed in an oil heating bath, placed under a Brookfield rotary viscosimeter. The oil bath was heated at a nearly constant rate from room temperature to 100°C, and was than held at this temperature (heating to 100°C takes typically approx. 20 minutes). The raw mixture had a Brookfield viscosity of << 1 Pa*s. Sample temperature and viscosity were recorded until the mixture became too viscous for further measurement (> 25 Pa*s). In each experiment, the time of isocyanate addition to the polyol considered as the start of the reaction (t = 0 min). Results are summarised in table 4.

**Table 4**

| Example | 4a | | 4b | | 4c | | 4d | | 3e | |
|---|---|---|---|---|---|---|---|---|---|---|
| Catalyst | Dimethyltin | | Dibutyltin | | Dibutyltin | | Dimethyltin | | No Catalyst | |
| | dioleate | | dioleate | | dilaurate | | dineodecanoate | | | |
| | | | (comparison) | | (comparison) | | (comparison) | | | |
| Time | Viscosity | Temp. | Viscosity | Temp. | Viscosity | Temp. | Viscosity | Temp. | Viscosity | Temp. |
| (min) | (mPa*s) | (°C) | (mPa*s | (°C) | (mPa*s) | (°C) | (mPa*s) | (°C) | (mPa*s) | (°C) |
| 0 | | | | | | | | | | |
| 1 | | | | | | | | | | |
| 2 | | | | | | | | | | |
| 3 | 600 | 34 | 900 | 35 | 700 | 33 | 500 | 38 | 400 | 36 |
| 4 | 500 | 39 | 800 | 40 | 500 | 38 | 700 | 43 | < 200 | 39 |
| 5 | 400 | 41 | 600 | 43 | 700 | 43 | 600 | 48 | < 200 | 42 |
| 6 | 400 | 47 | 200 | 49 | 700 | 50 | 500 | 54 | < 200 | 47 |
| 7 | 700 | 55 | 700 | 57 | 700 | 58 | 800 | 61 | < 200 | 53 |
| 8 | 900 | 64 | 1100 | 66 | 600 | 67 | 1100 | 69 | < 200 | 60 |
| 9 | 1300 | 72 | 1100 | 72 | 1200 | 74 | 1800 | 76 | < 200 | 66 |
| 10 | 2100 | 78 | 1800 | 78 | 1800 | 80 | 3400 | 81 | < 200 | 71 |
| 11 | 4300 | 83 | 4200 | 83 | 2600 | 84 | 8400 | 85 | < 200 | 76 |
| 12 | 9700 | 87 | 7900 | 87 | 5200 | 87 | >25000 | 88 | < 200 | 80 |
| 13 | >25000 | 89 | >25000 | 90 | 11900 | 90 | | | < 200 | 83 |
| 14 | | | | | >25000 | 92 | | | < 200 | 86 |
| 15 | | | | | | | | | < 200 | 88 |

### Example 5

### Preparation of Polyurethane Foams

### Water blown Foams from Polyether Polyols and aromatic Isocyanate (MDI)

100 g of Polyol 3 and 2 g of Polyol 4 were mixed and placed into a cardboard cup.

A master blend was made of 3.6 g of water, 0.5 g of Foam stabiliser 1, 0,6 g of Amine cocatalyst 1, and 0.15 g of Amine cocatalyst 2. The blend was added to the polyol and mixed.

0.5 g of the resp. organotin catalyst was added to the mixture and the mixture was stirred for 2 minutes.

61.8 g of Isocyanate 3 (index 100) were quickly added to the mixture. The mixture was stirred for 10 seconds, and than poured into a cardboard box.

A polyurethane foam formed and expanded. Cream time and rise time of the foam were recorded.

Results are summarised in Table 5.

**Table 5**

| Example | 5a | 5b | 5c |
|---|---|---|---|
| Catalyst | Dimethyltin | Dibutyltin | Dimethyltin |
| | dioleate | dilaurate | dineodecanoate |
| | | (comparison) | (comparison) |
| Cream Time (s) | 10 | 10 | 8 |
| Rise Time (s) | 54 | 44 | 45 |

### Example 6

### Determination of the Fogging of Catalysts by Gravimetry

A dry, clean round piece of aluminum foil (diameter 103 mm, thickness 0.03 mm) was weighed. 5 g of the resp. liquid organotin catalyst and 0.5 g of water were placed onto the bottom of a dry and clean glass beaker (inner diameter 80 mm, outer diameter 90 mm).

A silicone rubber ring was fitted to the neck of the beaker, the aluminum foil was placed on top of it, and covered with a glass sheet (110 x 110 x 3 mm). The beaker was hang into a thermostated glycerol heating bath in such a way, that the glass sheet was 60 mm above the glycerol level. An aluminum cooling block (connected to another thermostat) was placed onto the glass sheet. For 16 hours, a glycerol bath temperature of 100°C, and a cooling block temperature of 21°C was maintained. Subsequently, the aluminum foil was placed into a dessicator and kept there for 1 hour at room temperature over silica.

The aluminum foil was then weighed again, and the weight difference (in mg) was recorded as mg of fogging condensate.

Results are summarised in Table 6.

**Table 6**

| Example | 6a | 6b | 6c |
|---|---|---|---|
| Catalyst | Dimethyltin | Dibutyltin | Dimethyltin |
| | dioleate | dilaurate | dineodecanoate |
| | | (comparison) | (comparison) |
| Fogging condensate | 21.5 | 194.2 | 234.4 |
| (mg) | | | |

### Example 7

### Determination of the Fogging of Polyurethane Foams by Gravimetry

### Foams based on Polyether Polyols and aromatic Isocyanate (MDI)

The foam samples prepared in Example 5 were cut into round disks (each 80 mm in diameter, and 10 g of weight). Example 6 was repeated with the difference, that instead of 5 g of the resp. liquid organotin catalyst and 0.5 g of water, now the resp. foam disks were placed onto the bottom of the glass beaker.

Results are summarised in Table 7.

**Table 7**

| Example | 7a | 7b | 7c |
|---|---|---|---|
| Foam sample | Foam prepared with | Foam prepared with | Foam prepared with |
| | Dimethyltin dioleate | Dibutyltin dilaurate | Dimethyltin dineodecanoate |
| | | (comparison) | (comparison) |
| Fogging | 1.15 | 1,51 | 3.45 |
| condensate | | | |
| (mg) | | | |

In view of the many changes and modifications that can be made without departing from principles underlying the invention, reference should be made to the appended claims for an understanding of the scope of the protection to be afforded the invention.

## Claims

1. A polyurethane article with low emission obtainable by condensation reaction including the use of metal catalysts wherein said metal catalyst has a low emissivity and is an organotin compound of the general formula
**R₂SnX₂**
wherein R is methyl and X is a carboxylate group with 14-20 carbon atoms having at least one olefinic double boned.

2. Polyurethane article according to claim 1, wherein in said organotin compound X is a carboxylate group derived from a carboxylic acid of the type
**R'-COOH**
wherein R' is a C₁₃-C₁₉-hydrocarbyl group having one or more olefinic double bonds.

3. Polyurethane article according to claim 1 or 2, wherein said olefinic double bonds are isolated double bonds.

4. Polyurethane article according to claim 2 or 3, wherein R' is an aliphatic, substituted or unsubstituted alkenyl group.

5. Polyurethane article according to anyone of the preceding claims, wherein in said organotin compound said hydrocarbyl and/or carboxylate group is a linear group.

6. Polyurethane article according to anyone of the preceding claims, wherein in said organotin compound the carboxylate group is selected from:
oleate, ricinoleate, linoleate and linolenate.

7. Polyurethane article according to anyone of the preceding claims, wherein said organotin compound is liquid at room temperature (20-25°C).

8. Polyurethane article according to anyone of the preceding claims, wherein said polyurethane article is a foamed article.

9. Polyurethane article of claim 8, wherein the polyurethane foam is derived from aliphatic isocyanate.

10. Use of an organotin compound according to anyone of claims 1 to 7 in the manufacture of polyurethane articles with low emissivity of said organotin compound.

11. The use of claim 10, wherein said polyurethane article is a foamed article.

## Patentansprüche

1. Polyurethan-Gegenstand mit geringer Emission, erhältlich durch eine Kondensationsreaktion, welche die Verwendung von Metallkatalysatoren einschließt, wobei der Metallkatalysator einen niedrigen Emissionsgrad aufweist und eine Organozinn-Verbindung der allgemeinen Formel
**R₂SnX₂**
ist, in der R für Methyl steht und X eine Carboxylatgruppe mit 14-20 Kohlenstoffatomen mit mindestens einer olefinischen Doppelbindung ist.

2. Polyurethan-Gegenstand nach Anspruch 1, bei dem in der Organozinn-Verbindung X eine Carboxylatgruppe ist, die von einer Carbonsäure der Art
**R'-COOH**
abgeleitet ist, worin R' eine (C₁₃-C₁₉)-Hydrocarbylgruppe mit einer oder mehreren olefinischen Doppelbindungen ist.

3. Polyurethan-Gegenstand nach Anspruch 1 oder 2, bei dem die olefinischen Doppelbindungen isolierte Doppelbindungen sind.

4. Polyurethan-Gegenstand nach Anspruch 2 oder 3, bei dem R' eine aliphatische substituierte oder unsubstituierte Alkenylgruppe ist.

5. Polyurethan-Gegenstand nach irgendeinem der vorangehenden Ansprüche, bei dem in der Organozinn-Verbindung die Hydrocarbyl- und/oder Carboxylatgruppe eine lineare Gruppe ist.

6. Polyurethan-Gegenstand nach irgendeinem der vorangehenden Ansprüche, bei dem in der Organozinn-Verbindung die Carboxylatgruppe ausgewählt ist aus: Oleat, Ricinoleat, Linoleat und Linolenat.

7. Polyurethan-Gegenstand nach irgendeinem der vorangehenden Ansprüche, bei dem die Organozinn-Verbindung bei Raumtemperatur (20-25°C) flüssig ist.

8. Polyurethan-Gegenstand nach irgendeinem der vorangehenden Ansprüche, bei dem der Polyurethan-Gegenstand ein geschäumter Gegenstand ist.

9. Polyurethan-Gegenstand nach Anspruch 8, bei dem der Polyurethan-Schaumstoff von aliphatischem Isocyanat abgeleitet ist.

10. Verwendung einer Organozinn-Verbindung nach irgendeinem der Ansprüche 1 bis 7 bei der Herstellung von Polyurethan-Gegenständen mit geringem Emissionsgrad der Organozinn-Verbindung.

11. Verwendung nach Anspruch 10, bei der der Polyurethan-Gegenstand ein geschäumter Gegenstand ist.

## Revendications

1. Article en polyuréthanne à faible émission pouvant être obtenu par réaction de condensation incluant l'utilisation de catalyseurs métalliques, dans lequel ledit catalyseur métallique a une faible émissivité et est un composé organostannique ayant la formule générale
**R₂SnX₂**
où R est un méthyle et X est un groupement carboxylate avec 14 à 20 atomes de carbone ayant au moins une double liaison oléfinique.

2. Article en polyuréthanne selon la revendication 1, dans lequel dans ledit composé organostannique X est un groupement carboxylate dérivé d'un acide carboxylique du type
**R'-COOH**
où R' est un groupement hydrocarbyle en C₁₃-C₁₉ ayant une ou plusieurs doubles liaisons oléfiniques.

3. Article en polyuréthanne selon la revendication 1 ou 2, dans lequel lesdites doubles liaisons oléfiniques sont des doubles liaisons isolées.

4. Article en polyuréthanne selon la revendication 2 ou 3, dans lequel R' est un groupement alcényle aliphatique substitué ou non substitué.

5. Article en polyuréthanne selon l'une quelconque des revendications précédentes, dans lequel dans ledit composé organostannique ledit groupement hydrocarbyle et/ou carboxylate est un groupement linéaire.

6. Article en polyuréthanne selon l'une quelconque des revendications précédentes, dans lequel dans ledit composé organostannique le groupement carboxylate est choisi parmi :
un oléate, un ricinoléate, un linoléate et un linolénate.

7. Article en polyuréthanne selon l'une quelconque des revendications précédentes, dans lequel ledit composé organostannique est liquide à la température ambiante (20-25 °C).

8. Article en polyuréthanne selon l'une quelconque des revendications précédentes, dans lequel ledit article en polyuréthanne est un article expansé.

9. Article en polyuréthanne selon la revendication 8, dans lequel la mousse de polyuréthanne est dérivée d'un isocyanate aliphatique.

10. Utilisation d'un composé organostannique selon l'une quelconque des revendications 1 à 7 dans la fabrication d'articles en polyuréthanne avec une faible émissivité dudit composé organostannique.

11. Utilisation selon la revendication 10, dans laquelle ledit article en polyuréthanne est un article expansé.
